# FASCICULE DE BREVET EUROPEEN

(11) **EP 3 262 362 B1**
(45) Date de publication et mention de la délivrance du brevet: **08.07.2020**
(21) Numéro de dépôt: 16707689.2
(22) Date de dépôt: 25.02.2016
(51) Int. Cl.: F28D 20/02

(54) **DISPOSITIF DE GESTION THERMIQUE D'UNE UNITÉ DE RÉSERVE D'ÉNERGIE**
WÄRMEVERWALTUNGSVORRICHTUNG EINER ENERGIESPEICHEREINHEIT
THERMAL MANAGEMENT DEVICE OF AN ENERGY STORAGE UNIT

(30) Priorité: 25.02.2015 FR 1551608
(43) Date de publication de la demande: 03.01.2018
(73) Titulaire: Valeo Systèmes Thermiques, 78320 Le Mesnil Saint Denis (FR)
(72) Inventeur: ROBILLON, Lionel, 72230 Mulsanne (FR); AZZOUZ, Kamel, 75012 Paris (FR); DENOUAL, Christophe, 72430 Noyen sur Sarthe (FR)
(74) Mandataire: Neuviale, Bertrand
(86) Numéro de dépôt international: PCT/EP2016/053985
(87) Numéro de publication internationale: WO 2016/135243

(56) Documents cités:
- FR-A1- 2 878 613
- US-A1- 2012 263 980

## Description

La présente invention concerne la régulation thermique d'une unité de réserve d'énergie et plus particulièrement un dispositif de gestion thermique de pack batteries ou de batterie simple de grande dimension, notamment dans le domaine automobile. Le document US 2012/0263980 décrit un dispositif selon le préambule de la revendication 1.

La régulation thermique des batteries et pack batteries, notamment dans le domaine automobile et encore plus particulièrement dans le domaine des véhicules électriques et hybrides, est un point important car si les batteries sont soumises à des températures trop froides, leur autonomie peut décroître fortement et si elles sont soumises à des températures trop importantes, il y a un risque d'emballement thermique pouvant aller jusqu'à la destruction de la batterie.

Afin de réguler la température des batteries, il est connu d'ajouter un dispositif de gestion thermique du module batterie. Ces dispositifs utilisent généralement des fluides caloporteurs circulant, par exemple au moyen d'une pompe, dans un circuit de conduit, ledit circuit de conduit passant notamment à l'intérieur de tubes plats en contact direct avec les batteries.

Les fluides caloporteurs peuvent ainsi absorber de la chaleur émise par la ou les batteries afin de les refroidir et évacuer cette chaleur au niveau d'un ou plusieurs échangeurs thermiques comme par exemple un radiateur ou un réfrigérant. Les fluides caloporteurs peuvent également, si besoin est, apporter de la chaleur pour réchauffer lesdites batteries, par exemple s'ils sont reliés à une résistance électrique ou à un chauffage par Coefficient Positif de Température (CTP).

Les fluides caloporteurs généralement utilisés sont l'air ambiant ou des liquides comme par exemple l'eau. Les liquides étant meilleurs conducteurs de chaleur que les gaz, c'est une solution qui est privilégiée car plus efficace.

De façon générale, les tubes plats sont placés sous les batteries, lesdites batteries reposant ainsi sur lesdits tubes plats. Les tubes plats sont généralement réalisés en métal et sont disposés en parallèle les un par rapport aux autres. Les tubes plats sont reliés à des collecteurs à leurs extrémités de sorte à former un ou plusieurs circuits de conduits de circulation du fluide caloporteur entre une entrée et une sortie de fluide.

Cependant, le contact entre les tubes plats et le pack batteries peut varier sur la surface globale de la batterie. Ainsi, sur certaines zones le contact peut être bon, alors que sur d'autres ce dernier peut être moins bon voir même absent, par exemple du fait d'irrégularités aussi bien sur les tubes plats qu'à la surface du pack batteries.

Un des buts de l'invention est de remédier au moins partiellement aux inconvénients de l'art antérieur et proposer un dispositif de gestion thermique amélioré.

La présente invention concerne donc un dispositif de gestion thermique d'une unité de réserve d'énergie selon la revendication 1.

Les tubes sont par exemple des tubes plats, ou des tubes de section ovale ou ronde.

La présence de ce matériau à changement de phase composite permet de compenser les irrégularités de la surface des tubes et/ou de ladite unité de réserve d'énergie et ainsi les échanges thermiques entre ces deux éléments sont améliorés et plus uniformes sur toute la surface de ladite unité de réserve d'énergie. De plus le matériau à changement de phase composite, du fait de la présence d'un matériau à changement de phase en son sein, permet une gestion thermique de l'unité de réserve d'énergie même si un fluide caloporteur ne circule pas dans les tubes.

Selon un aspect de l'invention, le matériau à changement de phase composite a une capacité de compression de l'ordre de 20 à 30%.

Selon un autre aspect de l'invention, le matériau à changement de phase composite a une épaisseur comprise entre 2 à 5mm.

Selon un autre aspect de l'invention, le matériau à changement de phase composite est disposé en lamelles, chaque lamelle recouvrant au moins partiellement un tube dudit dispositif.

Selon un autre aspect de l'invention, le matériau à changement de phase composite a une chaleur latente comprise entre 100 et 300 kJ/kg.

Selon un autre aspect de l'invention, le matériau à changement de phase composite comporte une matrice comprenant au moins un polymère.

Selon un autre aspect de l'invention, le matériau à changement de phase composite comporte une matrice comprenant des fibres de carbone.

Selon un autre aspect de l'invention, le matériau à changement de phase composite comporte un matériau à changement de phase ayant une température de changement de phase comprise entre 8°C et 35°C.

Selon un autre aspect de l'invention, l'unité de réserve d'énergie est un pack batteries.

La présente invention concerne également un ensemble comportant au moins un dispositif de gestion thermique tel que décrit précédemment et au moins une unité de réserve d'énergie.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un dispositif de gestion thermique,
- la figure 2 montre une représentation schématique d'un dispositif de gestion thermique selon un autre mode de réalisation,
- la figure 3 montre une représentation schématique en vue de côté d'une unité de réserve d'énergie selon un premier mode de réalisation,
- la figure 4 montre une représentation schématique en vue de côté d'une unité de réserve d'énergie selon un second mode de réalisation.

Les éléments identiques sur les différentes figures, portent les mêmes références.

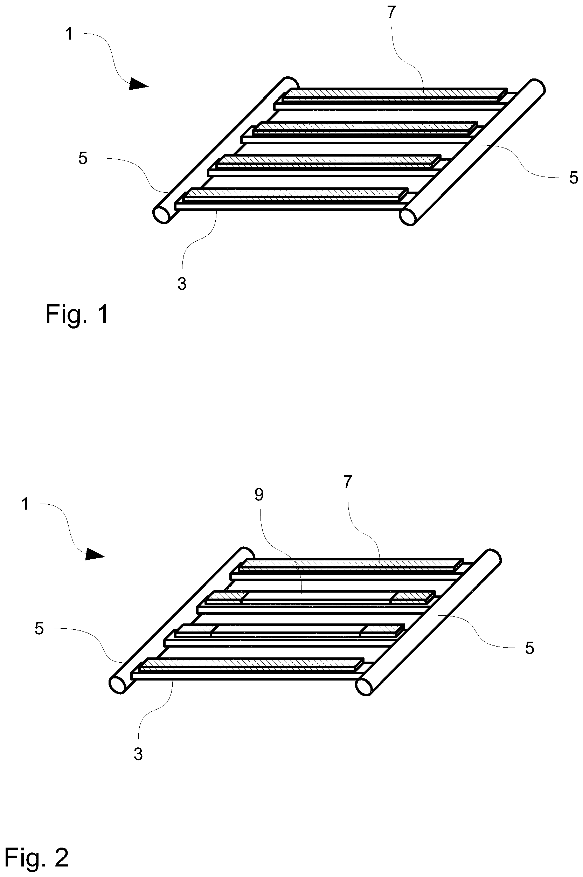

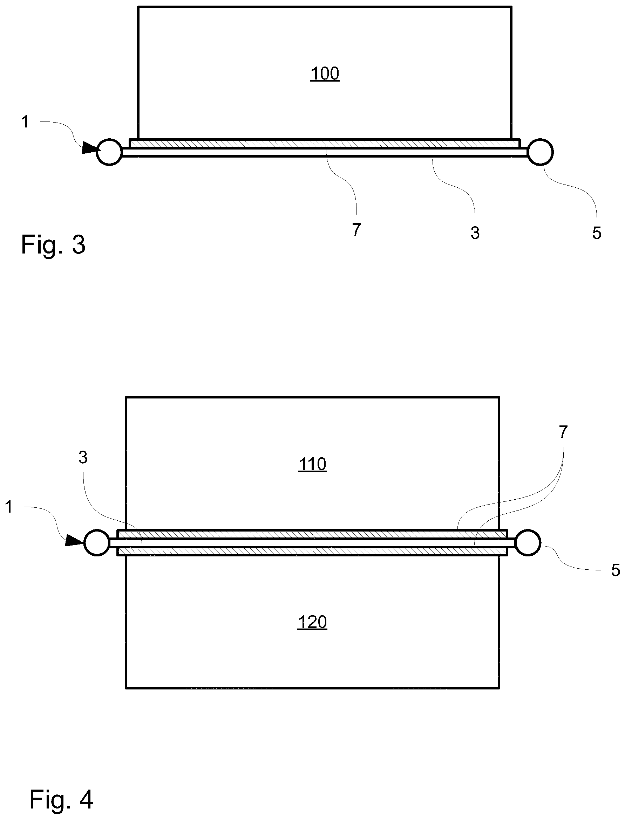

Comme le montre la figure 1, le dispositif de gestion thermique 1 comporte des tubes 3 disposés parallèles les uns aux autres et dont les extrémités sont reliées à des collecteurs 5. Au sein de ces tubes 3 circule un fluide caloporteur. Le dispositif de gestion thermique 1 est destiné à venir au contact d'au moins une unité de réserve d'énergie 100 afin d'en réguler la température grâce au fluide caloporteur (voir figure 3).

Les tubes sont par exemple des tubes plats, ou des tubes de section ovale ou ronde.

Par unité de réserve d'énergie 100 on entend un ensemble de cellules reliées électriquement entre elles et formant un pack batteries, ou alors une batterie simple de grande dimension.

Le dispositif de gestion thermique 1 comporte en outre au moins un matériau à changement de phase composite 7 placé sur la face des tubes 3 destinée à recevoir l'unité de réserve d'énergie 100, de sorte qu'à l'état monté, le matériau à changement de phase composite 7 est pris en sandwich entre l'unité de réserve d'énergie 100 et les tubes 3.

Le matériau à changement de phase composite 7 est plus particulièrement composé d'un matériau à changement de phase intégré dans une matrice. Le matériau à changement de phase peut être choisi par exemple parmi les matériaux à changement de phase organique, inorganique ou encore d'origine végétale, ayant une température de changement de phase comprise entre 8 et 35° C. La matrice peut quant à elle être une matrice comprenant au moins un matériau polymère. La matrice peut être constituée de fibres de carbone afin d'y apporter des propriétés conductrices, notamment conductrices de chaleur.

La présence de ce matériau à changement de phase composite 7 permet de compenser les irrégularités de la surface des tubes 3 et/ou de l'unité de réserve d'énergie 100. Ces irrégularités peuvent par exemple être dues à des déformations dans le temps ou bien dues aux défauts de surface des tubes 3 et/ou de l'unité de réserve d'énergie 100. Par la présence de ce matériau à changement de phase composite 7, les échanges thermiques entre ces deux éléments sont améliorés et plus uniformes sur toute la surface de contact entre les tubes 3 et l'unité de réserve d'énergie 100. De part ses propriétés de conduction thermique, le matériau à changement de phase composite 7 permet un bon échange thermique entre l'unité de réserve d'énergie 100 et le fluide caloporteur au sein des tubes 3 et ce aussi bien que le matériau à changement de phase soit en phase solide ou liquide.

Afin de pouvoir compenser ces irrégularités efficacement, le matériau à changement de phase composite 7 a de préférence une capacité de compression de l'ordre de 20 à 30%. Cette capacité de compression permet également un amortissement des mouvements potentiels de l'unité de réserve d'énergie 100.

L'épaisseur du matériau à changement de phase composite 7 est quant à elle de l'ordre de 2 à 5 mm afin de limiter la taille du dispositif de gestion thermique 1 tout en conservant des propriétés de compression suffisantes pour compenser les irrégularités et une bonne conduction thermique.

Comme le montrent les figures 1 et 2, le matériau à changement de phase composite 7 peut être disposé en lamelles. Chaque lamelle recouvre au moins partiellement un tube plat 3 du dispositif de gestion thermique 1. Ainsi seules les zones de contact comportent un matériau à changement de phase composite 7 ce qui permet de réduire les coûts et/ou de ne couvrir que les zones de surface de tubes où la conduction thermique entre l'unité de réserve d'énergie et la surface des tubes n'est pas suffisante pour réguler uniformément l'unité de réserve d'énergie.

Selon un premier mode de réalisation illustré à la figure 1, les lamelles de matériau à changement de phase composite 7 recouvrent totalement la face des tubes 3 en vis à vis de l'unité de réserve d'énergie 100. Selon un second mode de réalisation illustré à la figure 2, les lamelles de matériau à changement de phase composite 7 peuvent ne recouvrir que partiellement les tubes. Par exemple, seules les arrêtes de l'unité de réserve d'énergie 100 peuvent être en contact avec les lamelles de matériau à changement de phase 7. Afin d'assurer un échange thermique sur toute la surface des tubes 3, une cale 9 conductrice thermiquement peut être placée sur la face des tubes 3 en vis à vis de l'unité de réserve d'énergie 100 qui ne sont pas recouvert par des lamelles.

Le dispositif de gestion thermique 1 peut être placé au contact d'une seule unité de réserve d'énergie 100 comme cela est montré sur la figure 3.

Le dispositif de gestion thermique 1 peut a contrario être au contact d'une première réserve d'énergie thermique 110 sur une première des faces des tubes 3 et au contact d'une seconde réserve d'énergie thermique 120 sur la seconde face desdits tubes, comme montré sur la figure 4. Dans ce dernier cas, les deux faces des tubes 3 sont recouvertes de matériau à changement de phase composite 7 et utilisées pour réguler les réserves d'énergie thermique 100, limitant ainsi les pertes.

De plus le matériau à changement de phase composite 7 permet de refroidir l'unité de réserve d'énergie pendant un certain temps même si le fluide caloporteur ne circule plus dans les tubes 3. Cela permet ainsi une possible économie d'énergie pour le fonctionnement d'un système de régulation de température d'unité de réserve d'énergie 100.

Selon un exemple de réalisation, le matériau à changement de phase au sein du matériau à changement de phase composite 7 aura ainsi une chaleur latente comprise entre 100 et 300kJ/kg.

Ainsi, pour une surface de tubes 3 en contact avec l'unité de réserve d'énergie 100 de l'ordre de 3600cm², il est possible de mettre 540g de matériau à changement de phase. Cela permet ainsi d'obtenir, après 180s de charge à une température de 8°C, 90s de refroidissement d'une unité de réserve d'énergie 100 en fonctionnement avec une augmentation de la température de ce dernier de 8°C à 15°C. Cela correspond à une économie d'énergie de 30% sur le fonctionnement du système de régulation de température de l'unité de réserve d'énergie 100.

Ainsi, on voit bien que le dispositif de gestion thermique 1, du fait de la présence du matériau à changement de phase composite 7, permet non seulement une compensation des irrégularités pour un meilleur contact entre les tubes 3 et l'unité de réserve d'énergie 100 mais permet également des économies d'énergie, notamment de carburant et/ou d'électricité.

## Revendications

1. Dispositif de gestion thermique (1) d'une unité de réserve d'énergie (100), comportant des tubes (3) disposés parallèles les uns aux autres et dont une face au moins est apte à recevoir ladite unité de réserve d'énergie (100), ledit dispositif de gestion thermique (1) comporte en outre au moins un matériau à changement de phase composite (7) placé sur la face des tubes (3) apte à recevoir l'unité de réserve d'énergie (100), **caractérisé en ce que** ledit matériau à changement de phase composite (7) est disposé en lamelles, les lamelles recouvrent soit :
- totalement la face des tubes (3) en vis-à-vis de l'unité de réserve d'énergie (100), soit
- partiellement la face des tubes (3), une cale conductrice thermiquement (9) est placée sur la face des tubes (3) en vis-à-vis de l'unité de réserve d'énergie (100) qui ne sont pas recouvert par des lamelles.

2. Dispositif de gestion thermique (3) selon la revendication précédente, **caractérisé en ce que** le matériau à changement de phase composite (7) a une capacité de compression de l'ordre de 20 à 30%.

3. Dispositif de gestion thermique (1) selon l'une des revendications précédentes, **caractérisé en ce que** le matériau à changement de phase composite (7) a une épaisseur comprise entre 2 à 5mm.

4. Dispositif de gestion thermique (1) selon l'une des revendications précédentes, **caractérisé en ce que** le matériau à changement de phase composite (7) est disposé en lamelles, chaque lamelle recouvrant au moins partiellement un tube (3) dudit dispositif.

5. Dispositif de gestion thermique (1) selon l'une des revendications précédentes, **caractérisé en ce que** le matériau à changement de phase composite (7) a une chaleur latente comprise entre 100 et 300 kJ/kg.

6. Dispositif de gestion thermique (1) selon l'une des revendications précédentes, **caractérisé en ce que** le matériau à changement de phase composite (7) comporte une matrice comprenant au moins un polymère.

7. Dispositif de gestion thermique (1) selon l'une des revendications 1 à 6, **caractérisé en ce que** le matériau à changement de phase composite (7) comporte une matrice comprenant des fibres de carbone.

8. Dispositif de gestion thermique (1) selon l'une des revendications précédentes, **caractérisé en ce que** le matériau à changement de phase composite (7) comporte un matériau à changement de phase ayant une température de changement de phase comprise entre 8°C et 35°C.

9. Dispositif de gestion thermique (1) selon l'une des revendications précédentes, **caractérisé en ce que** l'unité de réserve d'énergie (100) est un pack batteries.

10. Ensemble comportant au moins un dispositif de gestion thermique (1) selon l'une quelconque des revendications précédentes et au moins une unité de réserve d'énergie (100).

## Patentansprüche

1. Wärmemanagementvorrichtung (1) einer Energiespeichereinheit (100) mit Rohren (3), die parallel zueinander angeordnet sind, und bei denen mindestens eine Außenseite geeignet ist, die Energiespeichereinheit (100) aufzunehmen, wobei die Wärmemanagementvorrichtung (1) ferner mindestens ein Phasenwechsel-Verbundmaterial (7) aufweist, das auf der Außenseite der Rohre (3) platziert ist, die geeignet ist, die Energiespeichereinheit (100) aufzunehmen, **dadurch gekennzeichnet, dass** das Phasenwechsel-Verbundmaterial (7) in Lamellen angeordnet ist, wobei die Lamellen entweder:
- die Außenseite der Rohre (3) gegenüber der Energiespeichereinheit (100) gesamt oder
- die Fläche der Rohre (3) teilweise bedecken, ein wärmeleitendes Zwischenstück (9) auf der Außenseite der Rohre (3) gegenüber der Energiespeichereinheit (100) platziert ist, die nicht von Lamellen bedeckt sind.

2. Wärmemanagementvorrichtung (3) nach dem vorhergehenden Anspruch, **dadurch gekennzeichnet, dass** das Phasenwechsel-Verbundmaterial (7) eine Zusammendrückbarkeit in der Größenordnung von 20 bis 30 % aufweist.

3. Wärmemanagementvorrichtung (1) nach einem der vorhergehenden Ansprüche, **dadurch gekennzeichnet, dass** das Phasenwechsel-Verbundmaterial (7) eine Dicke zwischen 2 bis 5 mm aufweist.

4. Wärmemanagementvorrichtung (1) nach einem der vorhergehenden Ansprüche, **dadurch gekennzeichnet, dass** das Phasenwechsel-Verbundmaterial (7) in Lamellen angeordnet ist, wobei jede Lamelle ein Rohr (3) der Vorrichtung zumindest teilweise bedeckt.

5. Wärmemanagementvorrichtung (1) nach einem der vorhergehenden Ansprüche, **dadurch gekennzeichnet, dass** das Phasenwechsel-Verbundmaterial (7) eine latente Wärme zwischen 100 bis 300 kJ/kg aufweist.

6. Wärmemanagementvorrichtung (1) nach einem der vorhergehenden Ansprüche, **dadurch gekennzeichnet, dass** das Phasenwechsel-Verbundmaterial (7) eine Matrix aufweist, die mindestens ein Polymer umfasst.

7. Wärmemanagementvorrichtung (1) nach einem der Ansprüche 1 bis 6, **dadurch gekennzeichnet, dass** das Phasenwechsel-Verbundmaterial (7) eine Matrix aufweist, die Kohlenstofffasern umfasst.

8. Wärmemanagementvorrichtung (1) nach einem der vorhergehenden Ansprüche, **dadurch gekennzeichnet, dass** das Phasenwechsel-Verbundmaterial (7) ein Phasenwechselmaterial mit einer Phasenwechseltemperatur zwischen 8 °C und 35 °C aufweist.

9. Wärmemanagementvorrichtung (1) nach einem der vorhergehenden Ansprüche, **dadurch gekennzeichnet, dass** die Energiespeichereinheit (100) ein Batteriepack ist.

10. Satz mit mindestens einer Wärmemanagementvorrichtung (1) nach einem der vorhergehenden Ansprüche und mindestens einer Energiespeichereinheit (100).

## Claims

1. Thermal management device (1) for an energy storage unit (100), comprising tubes (3) arranged parallel to one another and of which at least one face is able to accept the said energy storage unit (100), the said thermal management device (1) further comprising at least one composite phase change material (7) placed on that face of the tubes (3) that is able to accept the energy storage unit (100), **characterized in that** the said composite phase change material (7) is arranged in strips, the strips either:
- completely covering that face of the tubes (3) that faces the energy storage unit (100), or
- partially covering the face of the tubes (3), a thermally conducting spacer (9) being placed on the face of the tubes (3) facing the energy storage unit (100) that is not covered with strips.

2. Thermal management device (3) according to the preceding claim, **characterized in that** the composite phase change material (7) has a compressibility of the order of 20 to 30%.

3. Thermal management device (1) according to one of the preceding claims, **characterized in that** the composite phase change material (7) has a thickness of between 2 to 5 mm.

4. Thermal management device (1) according to one of the preceding claims, **characterized in that** composite phase change material (7) is arranged in strips, each strip at least partially covering a tube (3) of the said device.

5. Thermal management device (1) according to one of the preceding claims, **characterized in that** the composite phase change material (7) has a latent heat of between 100 and 300 kJ/kg.

6. Thermal management device (1) according to one of the preceding claims, **characterized in that** the composite phase change material (7) comprises a matrix containing at least one polymer.

7. Thermal management device (1) according to one of Claims 1 to 6, **characterized in that** the composite phase change material (7) comprises a matrix containing carbon fibre.

8. Thermal management device (1) according to one of the preceding claims, **characterized in that** the composite phase change material (7) comprises a phase change material having a phase change temperature of between 8ºC and 35ºC.

9. Thermal management device (1) according to one of the preceding claims, **characterized in that** the energy storage unit (100) is a battery pack.

10. Assembly comprising at least one thermal management device (1) according to any one of the preceding claims and at least one energy storage unit (100) .
